## Europäisches Patentamt

## European Patent Office

## Office européen des brevets

(11) Publication number: **0 146 521**
**B1**

(12) # EUROPEAN PATENT SPECIFICATION

(45) Date of publication of patent specification: **23.12.87**

(51) Int. Cl.⁴: **B 32 B 5/24**

(21) Application number: **84870157.9**

(22) Date of filing: **20.11.84**

(54) Laminate structure with improved acoustical absorption.

(30) Priority: **21.11.83 US 553462**
**21.11.83 US 553594**
**04.09.84 US 647095**
**04.09.84 US 647096**
**04.09.84 US 647311**
**07.09.84 US 648547**

(43) Date of publication of application:
**26.06.85 Bulletin 85/26**

(45) Publication of the grant of the patent:
**23.12.87 Bulletin 87/52**

(84) Designated Contracting States:
**AT BE CH DE FR GB IT LI LU NL SE**

(56) References cited:
**FR-A-1 298 431**
**GB-A- 778 655**
**GB-A- 863 611**
**GB-A-1 177 483**
**US-A-3 787 259**
**US-A-3 833 259**
**US-A-4 044 184**

(73) Proprietor: **Monsanto Company**
**Patent Department 800 North Lindbergh**
**Boulevard**
**St. Louis Missouri 63167 (US)**

(72) Inventor: **Holtrop, James Scott**
**178 Quarry Brook Drive**
**South Windsor Connecticut 06074 (US)**
Inventor: **Maurer, Richard Paul**
**500 Mountain Road**
**Wilbraham Massachusetts 01095 (US)**

(74) Representative: **McLean, Peter et al**
**Monsanto Europe S.A. Patent Department**
**Avenue de Tervuren 270-272 Letter Box No 1**
**B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 146 521

## Description

This invention relates to thermoplastic materials, and particularly to materials comprising foamed thermoplastic resins having substantially improved sound attenuation properties. More particularly this invention relates to a laminate structure formed from at least two foamed thermoplastic resins which exhibits improved sound absorption characteristics. This invention also relates to a thermoplastic laminate structure which may be molded into complex shapes while retaining its sound absorbing qualities. This invention also relates to the use of the laminate of this invention in motor vehicles to provide a quieter passenger compartment and in building construction to provide a quieter living and working space with improved noise attenuation across walls and floors.

## Description of the prior art

It has been desired for many years to reduce the noise impinging upon individuals at home, at work, and in the multitude of other places in which people find themselves. This effort has, of course, included efforts to reduce the noise within the vehicles used in transportation, for example, in automobiles, buses and airplanes. In addition to regulations to reduce noise levels in the workplace, certain municipalities are changing building codes, adopting stricter standards and imposing new specifications for party walls and interior floor/ceiling assemblies between apartments.

For many years increasing the mass density of a wall was considered as being the only way to improve the sound attenuation characteristic of structures. It was then found that separating the two halves of the wall construction produced a slight degree of sound reduction and filling the cavity between the two halves with a low density soundwave-absorbing membrane such as mineral wool further increased the sound reduction. A further increase in the reduction of sounds in structures was realized when it was found that thermoplastic foams when constructed in certain forms have a degree of sound resistance and inhibit to some extent the transmission of noise from one area to an adjacent area. However, it is also known that current thermoplastic foam constructions are subject to resonant short-comings which create areas where substantial loss of sound attenuation occurs throughout a broad frequency spectrum.

A recent development which has found some acceptance for floor/ceiling noise attenuation is a space filling mat of widely-spaced, three-dimensional, nylon non-woven matting covered on one face by a fabric.

A similar development was taking place in the field of transportation. The first attempt at decorating within an automobile, for example, consisted of support rods on the interior surface of the automobile roof which supported a fabric to cover the roof material. This construction is still in use today; however, a sound absorbing material such as mineral wool is often installed between the fabric and metal roof of the automobile. For many years a pressed board made of a formable resin material has also been used in automobiles as the headliner, the material covering the interior of the automobile roof. The pressed board has been painted for decoration or a softer decorative trim has been mechanically attached or bonded to the pressed board.

Foamed thermoplastic laminates have also been used in automobiles, particularly in the head liners. These foamed thermoplastic laminates were most often formed as a sandwich structure in which the foamed thermoplastic material was enclosed between liner board facings. Such board would be prepared for use by die-cutting and scoring or by pressing the board and applying a resin to fix the pressed shape. A decorative trim was often applied to the automotive interior side of the headliner. This decorative trim has typically been a thin layer of polyurethane foam covered with cloth or vinyl.

A very similar material is also in use today for headliners in automobiles. A thermoplastic sandwich is formed with a thermoplastic polymer skin. A layer of foamed styrene-maleic anhydride polymer is bonded to the interior of the thermoplastic sandwich and a thermoplastic polymer skin covers the foamed styrene-maleic anhydride polymer. A decorative trim, identical to that described above, is applied to the interior side of the automobile headliner.

The most recent effort to reduce the sound level within automobiles is the use of molded fiberglass which contains a phenol-formaldehyde polymer as a binder. A rayon scrim is attached to one side of a fiberglass batt and is compression molded to the desired automotive headliner shape. As with the others, a decorative trim, a thin foamed polyurethane layer covered with cloth or vinyl, is added to the side of the headliner which faces the automotive interior.

GB—A—778655 teaches a method of soundproofing a space, in which a plurality of mats of synthetic resins having different porosities are adhesively bonded to the bare walls of the space to be closed. However, GB—A—778655 does not teach a thermoformable laminate structure; its structure remains flat to be bonded to a wall. Moreover, GB—A—778655 has mats with different size pores, with the mat with the largest pores against the wall and the mat with the smallest pores being remote from the wall.

## Summary of the invention

The laminate structure of the present invention is one with improved acoustical absorption comprising:

a first layer of a foamed thermoplastic material;

a third layer of said foamed thermoplastic material; and

a second layer intermediate said first and third layers; characterized by

2

**0 146 521**

said second layer being a material having acoustical properties different from the acoustical properties of the thermoplastic material of said first and third layers;

said first and third layers of thermoplastic material having an outer surface, said outer surface having a resin impregnated fabric bonded thereto; and

said laminate structure being thermoformable. A thermoformable synthetic polymer resin is used to imprgnate the fabric.

Description of the drawings

Figure 1 is a side view of the laminate structures of this invention.

Figure 2 is a side view of the laminate structure of this invention with the decorative trim that is added when such a structure is utilized as an automotive headliner.

Description of the preferred embodiment

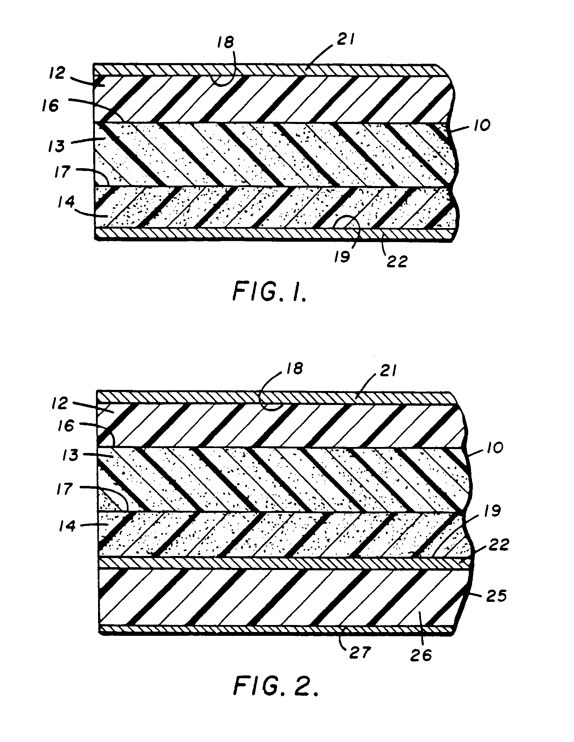

Turning now to Figure 1, a side view of the thermoformable laminate structure of this invention is shown. The laminate structure 10 has a first layer of thermoplastic material 12 and third layer of thermoplastic material 14. Both the first layer 12 and third layer 14 are fabricated from the same thermoplastic material; A second layer of material 13 is located intermediate the first and third layers of thermoplastic material 12 and 14, and is fabricated from a thermoplastic material that is different from the thermoplastic material used for the first layer 12 and the third layer 14. The thermoplastic materials utilized for the first layer 12, second layer 13, and third layer 14 are produced as a foamed material in a manner that is well-known and will not be further described herein. The first layer 12 and third layer 14 of thermoplastic material each have an inner surface, 16 and 17 respectively, and an outer surface, 18 and 19 respectively. The inner surface 16 of first layer 12 and the inner surface 17 of third layer 14 are in contact with the surfaces of second layer 13 which is located intermediate the first and third layers 12 and 14 and the surfaces are bonded together. This bonding is most easily achieved by applying an adhesive to the surfaces before the surfaces come in contact with one another. The adhesive may coat the entire surface area of inner surface 16 and the inner surface 17, as well as the surfaces of the second layer of thermoplastic material 13; however, it is preferable that the adhesive only be applied to a portion of the surfaces such that only a portion of the second layer 13 is bonded to the first layer 12 and third layer 14 while the remainder of the surfaces are adjacent to and in contact with each other, but are not adhesively bonded to one another.

It has been determined that the thickness of the first and third layers, 12 and 14, of thermoplastic material has a great effect on the acoustical properties of the finished laminate structure 10. Therefore, it is desired that the first and third layers, 12 and 14, have a thickness within a range of from approximately 0.15 cm thick to approximately 1.25 cm thick and it is preferred that the thickness be within a range of from approximately 0.30 cm thick to approximately 0.65 cm thick.

The second layer 13 of material is fabricated from a material different from that used for the first layer 12 and third layer 14 to have different acoustical properties. Alternatively, the same material may be used if it has been treated or formed by a process to have different acoustical characteristics from the materials used for the first layer 12 and third layer 14. A preferred material for fabrication of the second layer 13 is polyurethane and specifically a foamed polyurethane. While the material itself is known, its use in the sandwich-like construction of this invention has been found to provide a greater degree of resistance to the transmittal of sound, that is, the laminate structure has enhanced acoustical properties and has increased the noise reduction that can be achieved. It is also possible to use materials such as foamed polystyrene, foamed polyvinyl-chloride and foamed polyethylene, or batts of polypropylene or polyester fibers for the second layer 13. As with the first layer 12 and third layer 14, the thickness of the second layer 13 of thermoplastic material is critical. The thickness of second layer is desired to be within a range of from approximately 0.15 cm to approximately 2.50 cm and it is preferred that the thickness of the second layer 13 be within a range of from approximately 0.30 cm to approximately 1.25 cm.

Second layer 13 is positioned intermediate first layer 12 and third layer 14. It is possible that the layers of material may be placed adjacent to and in contact with one another without bonding the layers to one another and, in such a configuration, a certain amount of sound absorption or reduction may be achieved. However, it has been found that if the three layers of material are adhesively bonded to one another, the acoustical properties of the laminate are greatly enhanced. The adhesive may coat the entire surface area of inner surface 16 and inner surface 17 as well as the surfaces of the second layer of thermoplastic material 13; to provide complete bonding of the three layers of thermoplastic material to one another. While applying the adhesive to the entire surface area of inner surfaces 16 and 17 and the surfaces of second layer 13 to adhesively bond the first layer 12 and third layer 14 to the second layer 13 will produce a laminate having improved acoustical properties, it has been found to be preferable to apply the adhesive to only a portion of the surface areas to be bonded together such that only a portion of the second layer 13 is bonded to the first layer 12 and third layer 14 and the remainder of the surface area is in contact but not bonded together. When the adhesive is applied to only a portion of the surface area, the portion being from approximately 20% to approximately 60% of the total surface area of each of the surfaces which are to be adhesively bonded, the laminate structure 10 exhibited superior acoustical properties, that is a higher degree of absorption, reduction or attenuation of noise, than was exhibited by the aforementioned laminate in which the entire surface areas were adhesively bonded.

A sheet of resin-impregnated fabric 21 is adhesively bonded to the outer surface 18 of first layer 12 and a second such sheet 22 is adhesively bonded to the outer surface 19 of third layer 14. Preferably the sheets bonded to outer surface 18 and outer surface 19 are identical; however, it is possible that the sheets may be different. This sheet protects the somewhat fragile surface of the foamed material from abrasion and provides durability to the laminate structure. The sheet also provides stiffness so that the laminate structure can be easily handled.

To provide a thermoformable laminate structure a resin impregnated fabric 21 is adhesively bonded to the outer surface 18 of first layer 12 and a second resin impregnated fabric 22 is adhesively bonded to the outer surface 19 of third layer 14. Preferably the resin impregnated fabrics 21 and 22 are the same; however, the fabrics, the resin, or both may be different. It is preferred that the fabric be a spun-bonded, non-woven polyester fabric. While the polyester fabric is preferred, non-woven, spun-bonded nylon materials and woven materials such as polyesters, polyester-cotton blends, and nylons are also satisfactory. The fabric is impregnated with a resin which is preferably a synthetic polymer resin chosen for its stability and reproducibility. For this service acrylic resins are preferred although phenolic resins are equally servicable. The acrylic resins are preferred because they contain no formaldehyde and they are thermoplastic so that the curing operation required for phenolic resins is eliminated. The acrylic resins must be capable of withstanding high heat, greater than 75°C., and have a high moisture resistance. In addition, they must be thermoformable because the laminate structure 10 is made of thermoplastic materials which can be heated and reshaped in a molding process. When a phenolic resin is used, the resin is dried to a "B stage", that is, a partially cured state in which the resin is touchable but remains slightly tacky. During the molding process in which the laminate structure 10 is molded into a final shape, the high heat provides a final cure to the phenolic resins which harden and are no longer formable. Either resin may be applied to the fabric by an aqueous solution, but a methanol solution may be used for application of the acrylic resins. The resins dispersant liquid is removed through a heating prior to using the resin impregnated fabric 21 and 22 in the production of the laminate structure 10.

When the laminate structure of this invention is utilized in the manufacture of headliners for use in automobiles, a decorative trim is applied to the surface facing the interior of the automobile. Figure 2 shows the laminate structure 10 of this invention with the decorative trim applied. The laminate structure 10 shown in Figure 2 is similar to the laminate structure shown in Figure 1 and the corresponding parts of the laminate structure shown in each of Figure 1 and Figure 2 are given the same numbers. The decorative trim 25 is adhesively bonded to the resin impregnated fabric 22 on the outer surface 19 of the third layer 14 of thermoplastic material which is a part of the laminate structure 10. The decorative trim 25 has two components, a thin polyurethane foam layer 26 which provides cushioning on the inside of the automotive headliner and covers any seams, ridges, cracks, or other blemishes in the laminate structure 10 to provide a smooth appearance to the inside of the headliner and a cloth covering 27 which is adhesively attached to the polyurethane layer 26 to complete the decorative trim 25. While the decorative trim 25 is desirable for the appearance of the headliner when installed within an automobile, the decorative trim 25 also increases the acoustical properties of the laminate structure 10.

The acoustical properties, the ability to absorb, reduce or attenuate noise, are enhanced if only a portion of each surface is adhesively bonded to the adjacent surface. The adhesively bonded portion of the surfaces should range from approximately 20% to approximately 60% of the surface area and it is preferred that only approximately 35% to approximately 50% of the surface area of each of the surfaces be adhesively bonded to the adjacent surface for the greatest acoustical properties. When the laminate structure 30 is used as an automotive headliner, decorative trim can be added as shown and described in Figure 2.

The advantages and improved acoustical properties of the laminate structure of this invention may be seen in the following examples and table.

Example I

In Example I the acoustical absorption coefficients of a polystyrene foam board, two laminate structures which are constructed in accordance with the teachings of this invention, but are not adhesively bonded, and a fiberglass headliner of the type now used in automobiles were compared. The acoustical absorption coefficient for a material is the percentage of the sound that will be absorbed by that material. In each example, the tests for the acoustical absorption coefficient were performed in accordance with the American Society for Testing and Materials (ASTM) Standard C384-77 (impedanc tube).

The polystyrene foam board was a 0.30 cm thick foamed polystyrene. A kraft liner board facing was laminated to each side of the foamed polystyrene board. A decorative trim, formed as a 0.65 cm thick foamed polyurethane layer with a cloth covering, was adhesively bonded to one side of the polystyrene board.

The fiberglass headliner was formed as a fiberglass batt with a rayon scrim attached to one side of the batt. A decorative trim, a 0.65 cm thick polyurethane layer covered with cloth, was adhesively bonded to the side of the fiberglass batt opposite the rayon scrim. The fiberglass headliner, including the decorative trim, had a total thickness of approximately 1.90 cm.

Sample 1 was formed as a laminate structure having first and third layers of polystyrene foam 0.38 cm thick with a second layer of polyurethane foam 0.65 cm thick intermediate the first and third layers of polystyrene. Each layer was placed in physical contact with the adjacent layer but the layers were not adhesively bonded together. The outer surfaces of the first and third layers were covered by a resin impregnated, spunbonded, non-woven fabric. Decorative trim, 0.65 cm of polyurethane with a cloth covering, was placed adjacent the outer surface of the first layer of polystyrene.

It is taught in this invention that the layers that form the laminate structure be bonded by adhesive over at least a portion of their surface areas; however, for the purposes of Example I, the layers which form the laminate structures of Sample 1 were laid adjacent to and in physical contact with one another, but were not adhesively bonded. The results of the test for the acoustical absorption coefficients are shown in Table I.

Example II

In Example II the acoustical absorption coefficients of two additional samples of a laminate structure constructed in accordance with the teachings of this invention were determined.

Sample 2 was similar to the laminate structure of Sample 1. The first and third layers were polystyrene foam 0.38 cm thick. The outer surfaces of the first and third layers were covered by a resin impregnated, spunbonded, non-woven fabric. A second layer of polyurethane foam 0.65 cm thick was positioned between the first and third layers of polystyrene foam and was adhesively bonded to each. A decorative trim formed of polyurethane foam 0.65 cm thick was positioned against the outer surface of the first layer of polystyrene foam.

Sample 3 was constructed similarly to Sample 2. First and third layers were formed of polystyrene foam 0.38 cm thick. The outer surfaces of the first and third layers were covered by a resin impregnated, spunbonded, non-woven fabric. A 0.65 cm layer of polyurethane foam was positioned intermediate the first and third layers of polystyrene foam. A decorative trim of 0.65 cm thick polyurethane foam was positioned against the outer surface of the first layer of polystyrene foam. For Sample 3 the layers which forms the laminate structure were adhesively bonded to one another; but, only a portion of the surfaces were bonded to one another such that approximately 35% of the total surface area was adhesively bonded.

The results of the acoustical absorption tests for Samples 2 and 3 are shown in Table I.

Example III

For Example III the laminate structure, Sample 4, was constructed using a reticulated polyurethane foam coated with polyvinyl chloride (PVC) for the intermediate layer of material. The laminate was constructed having first and third layers of polystyrene foam 0.38 cm thick. The outer surfaces of the first and third layers were covered by a resin impregnated, spunbonded, non-woven fabric. A second layer of 0.95 cm thick polyurethane foam coated with PVC was intermediate the first and third layers and was adhesively bonded to each. A decorative trim, 0.65 cm thick polyurethane foam, was bonded to the outer surface of the first layer of polystyrene. The results of the test for the acoustical absorption coefficient for Sample 4 are shown in Table I.

Example IV

Three additional samples were tested for Example IV. Most polystyrene foam exhibits relatively poor sound absorption characteristics. However, polystyrene foam can be made to exhibit very good sound absorption characteristics if the passageways between the cells are opened sufficiently to allow sound to pass through the cells instead of immediately being reflected. When treated to open the cells, the polystyrene foam can best be described as a reticulated material. The laminate structures made for Example IV used this treated polystyrene foam in place of the polyurethane foam used in the prior Examples. This treated polystyrene foam can be created using any of several methods which will not be discussed here.

Sample 5 was a single layer of polystyrene foam 1.25 cm thick. The foam was very coarse and was treated to open passageways between the cells of the polystyrene. A 0.65 cm thick polyurethane foam layer was bonded to the layer of polystyrene foam as a decorative trim.

Sample 6 was a single layer of polystyrene foam 1.25 cm thick with a 0.65 cm thick polyurethane foam layer bonded to the layer of polystyrene foam as a decorative trim. Unlike Sample 5, Sample 6 was not treated to open the passageways between the cells of the polystyrene foam.

Sample 7 was a laminate structure constructed in accordance with this invention. Sample 7 had first and third layers of polystyrene foam 0.30 cm thick. The outer surfaces of the first and third layers were covered by a resin impregnated, spunbonded, non-woven fabric. A second layer, intermediate the first and third layers, was polystyrene foam 0.65 cm thick which had the cells opened further. A decorative trim of 0.65 cm thick polyurethane foam was bonded to the outer surface of the first layer of polystyrene foam.

Sample 8 was identical to Sample 7 except that the second layer in Sample 8 was treated polystyrene foam 1.25 cm thick.

The results of the test performed on Samples 5, 6, 7 and 8 to determine their acoustical absorption coefficients are shown in Table I. The opening of the cells in the polystyrene foam greatly increased the acoustical absorption properties of the material.

5

**0 146 521**

TABLE I
Acoustical absorption coefficients ($a_N$)

| Material | Low frequency noise | High frequency noise |
|---|---|---|
| Polystyrene board | 0.06 | 0.14 |
| Fiberglass | 0.12 | 0.46 |
| Sample 1 | 0.05 | 0.43 |
| Sample 2 | 0.20 | 0.42 |
| Sample 3 | 0.08 | 0.82 |
| Sample 4 | 0.30 | 0.41 |
| Sample 5 | 0.02 | 0.16 |
| Sample 6 | 0.04 | 0.12 |
| Sample 7 | 0.02 | 0.50 |
| Sample 8 | 0.02 | 0.50 |

From Table I it can be seen that the laminate structure of this invention demonstrates acoustical properties which are equal to or better than the fiberglass headliners and the polystyrene foam board. The higher the coefficient shown in Table I, the greater the sound absorption exhibited by the material being tested. Samples 2, 3 and 4 which most clearly represents the teachings of this invention are generally superior in their acoustical properties at both the low frequency noise and at the high frequency noise. The sound frequencies utilized in these tests were selected to represent the low frequency noise and the high frequency noise typically found within an automobile as it is driven. The low frequency noise was approximately 500 hertz with a testing range from approximately 10 hertz to approximately 700 hertz. The high frequency noise was nominally considered to be 1000 hertz, but the laminated structures were tested within a range of from approximately 750 hertz to approximately 4000 hertz. In addition to the better acoustical properties, the laminate structure of this invention provides a benefit to the automotive industry by being slightly lighter than the fiberglass headliner now in use.

. Two theories have been considered to explain why the laminate structure of this invention achieves better acoustical properties than, for example, the fiberglass headliner now in use in automobiles. The first explanation is that the first and third layers are transparent to the low frequency sound which then passes through the first and third layers and is trapped within the second layer in the center of the laminate structure. The second explanation is that the second layer separates the first and third layers of thermoplastic material and that the sound is trapped between the first and third layers and bounces repeatedly between them until it is dissipated. There may, of course, be other explanations for the improved acoustical absorption properties.

Example V

This example illustrates a laminate structure according to this invention which has improved acoustical absorption.

A laminate structure was prepared by using two sheets of fabric-faced polystyrene foam as outer layers to a core sheet of polyurethane foam. The fabric-faced polystyrene foam sheets had a thickness of 3.6 millimeters; a non-woven, spunbonded, polyester fabric having a basis weight of 34 grams per square meter was adhesively bonded to the outer surface of each sheet of polystyrene foam which had a density of 55 kilograms per cubic meter. The polyurethane foam core sheet had a thickness of 6.4 millimeters and a density of 18 kilograms per cubic meter. The three sheets were adhesively bonded together.

Example VI

This example illustrates the advantageous acoustical absorption properties of the laminate structure of Example V when utilized in the construction of building wall partitions to attenuate noise, for instance between rooms or party walls or from outside sources.

A variety of wall structures were constructed based on modifications of standard wall structure utilizing one-half inch (13 millimeter) paper-faced gypsum wall board nailed to nominal 2"×4" (5.08 cm×10.16 cm) wood stud framing. The following wall structures were constructed:

6

**0 146 521**

A. One-half inch (13 mm) sheets of paper-faced gypsum wall board nailed to opposing sides of the framing;

B. Same as A with the laminate structure of Example V under one of the gypsum sheets.

C. Same as A with R-11 fiberglass batting between the stud framing.

D. Same as C with the laminate structure of Example V under one of the gypsum sheets.

E. Same as A with the laminate structure of Example V under both of the gypsum sheets.

F. Same as E with R-11 fiberglass batting between the stud framing.

The testing of sound transmission loss for building partitions was conducted in accordance with the American Society of Testing of Materials (ASTM) Standard E 90-75, "Standard Method for Laboratory Measurement of Airborne Sound Transmission Loss of Building Partitions", incorporated herein by reference. The Sound Transmission Class (STC) of each wall structure was determined in accordance with ASTM E 413-73, "Standard Classification for Determination of Sound Transmission Class", incorporated herein by reference, except that analysis was conducted using octave bands instead of one-third octave bands. The determined sound transmission class, as measured in decibels (dB), for each of the wall structures A through F is shown in Table II.

TABLE II
Wall structure sound transmission class

| Structure | Symbolic structure* | | | STC(dB) |
|---|---|---|---|---|
| | Wall — Insulation — | | Wall | |
| A | G | | G | 36 |
| B | G/L | | G | 38 |
| C | G | FG | G | 38 |
| D | G/L | FG | G | 40 |
| E | G/L | | G/L | 41 |
| F | G/L | FG | G/L | 45 |

*G refers to gypsum wallboard; G/L refers to gypsum wallboard over the laminate; FG refers to R-11 fiberglass batting.

The wall structure designated F comprising gypsum wallboard installed over the laminate of Example V on both sides of R-11 fiberglass insulated stud framing has a sound transmission class of 45 decibels which advantageously provides acceptable noise attenuation for partitions between separate living areas or between living areas and corridors or public space of average noise. Such noise attenuation has previously generally been achieved by utilizing concrete block walls. By using the laminate structure of this invention building partitions having enhanced sound absorption characteristics can be achieved with substantial economic advantage in building construction.

Example VII

This example illustrates the advantageous acoustical absorption properties of the laminate structure of Example V when utilized in the flooring construction to attenuate noise in floor-ceiling separations between living areas. Noise attenuation was determined for a floor-ceiling structure comprising a four inch slab of concrete overlayed with successive layers of the laminate of Example V, 5/8 inch (16 millimeters) plywood and 1/8 inch (3 millimeter) vinyl tile. The laminate of Example V was adhesively bonded to the concrete and plywood with a general construction adhesive. All joints between the material were staggered and grout was applied between plywood joints. Twelve inch (30.5 centimeter) square vinyl tiles were adhesively bonded to the top surface of the plywood. The impact insulation class of the floor structure was determined in accordance with ASTM E 492-77, "Standard Method of Laboratory Measurement of Impact Sound Transmission Through Floor-Ceiling Assembies Using the Tapping Machine", incorporated herein by reference. The floor structure was determined to have an Impact Insulation Class of 51 decibels.

Example VIII

This example illustrates the acoustical absorption of the laminate structure of Examples V. Acoustical absorption coefficients were determined in accordance with ASTM Standard C 384-77, "Impedance and Absorption of Accoustical Material by the Tube Method" incorporated herein by reference. Average acoustical absorption coefficients determined at frequencies of 500 hertz and 1000 hertz are shown in Table III.

7

**0 146 521**

TABLE III
Acoustical absorption coefficient

| Laminate | 500 $H_3$ | 1000 $H_3$ |
|---|---|---|
| Example V | 0.08 | 0.29 |

**Claims**

1. A laminate structure with improved acoustical absorption comprising:
a first layer of a foamed thermoplastic material;
a third layer of said foamed thermoplastic material; and
a second layer intermediate said first and third layers; characterized by
said second layer being a material having acoustical properties different from the acoustical properties of the thermoplastic material of said first and third layers;
at least a portion of said first and second layers and said second and third layers being adhesively bonded together;
said first and third layers of thermoplastic material having an outer surface, said outer surface having a resin impregnated fabric bonded thereto; and
said laminate structure being thermoformable.

2. The thermoformable laminate structure of Claim 1 wherein said first and third layers of foamed thermoplastic material are foamed polystyrene.

3. The thermoformable laminate structure of Claim 1 wherein said second layer of material is selected from a group consisting of foamed polyurethane, foamed polystyrene, foamed polyurethane coated with polyvinyl-chloride, and foamed polyethylene.

4. The thermoformable laminate structure of Claim 1 wherein said second layer of material is a batt of polyester fibers.

5. The thermoformable laminate structure of Claim 1 wherein said resin impregnated fabric comprises a non-woven fabric impregnated with a synthetic polymer resin.

6. The thermoformable laminate structure of Claim 5 wherein said non-woven fabric is a polyester or nylon.

7. The thermoformable laminate structure of Claim 5 wherein said synthetic polymer resin is a thermoformable acrylic resin.

**Patentansprüche**

1. Laminatstruktur mit verbesserter Schalldämpfung umfassend
eine erste Schicht aus einem geschäumten thermoplastischen Material,
eine dritte Schicht aus dem genannten geschäumten thermoplastischen Material und
eine zweite Schicht zwischen der genannten ersten und dritten Schicht, dadurch gekennzeichnet, daß die genannte zweite Schicht ein Material mit akustischen Eigenschaften ist, die sich von den akustischen Eigenschaften des thermoplastischen Materials der ersten und dritten Schicht unterscheiden; daß zumindest ein Teil der ersten und zweiten Schicht und der zweiten und dritten Schicht haftend aneinander gebunden sind; daß die erste und dritte Schicht aus thermoplastischem Material eine Außenfläche aufweisen, welche Außenfläche einen harzimprägnierten Stoff daran gebunden aufweist; und daß die genannte Laminatstruktur wärmeverformbar ist.

2. Wärmeverformbare Laminatstruktur nach Anspruch 1, worin die erste und dritte Schicht aus geschäumtem thermoplastischen Material geschäumtes Polystyrol sind.

3. Wärmeverformbare Laminatstruktur nach Anspruch 1, worin die genannte zweite Materialschicht ausgewählt ist aus einer Gruppe bestehend aus geschäumtem Polyurethan, geschäumtem Polystyrol, mit Polyvinylchlorid beschichtetem geschäumten Polyurethan und geschäumtem Polyäthylen.

4. Wärmeverformbare Laminatstruktur nach Anspruch 1, worin die genannte zweite Materialschicht eine Watte aus Polyesterfasern ist.

5. Wärmeverformbare Laminatstruktur nach Anspruch 1, worin der genannte harzimprägnierte Stoff einen mit einem synthetischen Polymerharz imprägnierten Vliesstoff umfaßt.

6. Wärmeverformbare Laminatstruktur nach Anspruch 5, worin der genannte Vliesstoff ein Polyester oder Nylon ist.

7. Wärmeverformbare Laminatstruktur nach Anspruch 5, worin das genannte synthetische Polymerharz ein wärmeverformbares Acrylharz ist.

**Revendications**

1. Structure de stratifié ayant une meilleure absorption acoustique comprenant:
une première couche d'un matériau thermoplastique en mousse;
une troisième couche du matériau thermoplastique en mousse, et

8

**0 146 521**

une second couche entre les première et troisième couches, caractérisée en ce que:

la second couche est un matériau ayant des propriétés acoustiques différentes des propriétés acoustiques du matériau thermoplastique des première et troisième couches;

au moins une partie des première et seconde couches et une partie des seconde et troisième couches sont liées ensemble par collage;

les première et troisième couches de matériau thermoplastique ont une surface extérieure, un tissu imprégné de résine étant lié à cette surface extérieure; et

la structure du stratifié est thermoformable.

2. Structure de stratifié thermoformable selon la revendication 1, dans laquelle les première et troisième couches de matériau thermoplastique en mousse sont du polystyrène en mousse.

3. Structure de stratifié thermoformable selon la revendication 1, dans laquelle la seconde couche de matériau est choisie dans un groupe constitué du polyuréthane en mousse, du polystyrène en mousse, du polyuréthane en mousse revêtu de chlorure de polyvinyle, et du polyéthylène en mousse.

4. Structure de stratifié thermoformable selon la revendication 1, dans laquelle la second couche de matériau est une laize de fibres de polyester.

5. Structure de stratifié thermoformable selon la revendication 1, dans laquelle le tissu imprégné de résine comprend un tissu non tissé imprégné d'une résine de polymère synthétique.

6. Structure de stratifié thermoformable selon la revendication 5, dans laquelle le tissu non tissé est du polyester ou le matériau dit nylon.

7. Structure de stratifié thermoformable selon la revendication 5, dans laquelle la résine de polymère synthétique est une résine acrylique thermoformable.

9

FIG. I.

FIG. 2.